# EUROPÄISCHE PATENTSCHRIFT

(11) **EP 1 372 447 B1**
(45) Veröffentlichungstag und Bekanntmachung des Hinweises auf die Patenterteilung: **22.09.2004**
(21) Anmeldenummer: 02722105.0
(22) Anmeldetag: 20.02.2002
(51) Int. Cl.: A47J 43/08, A47J 43/07

(54) **HAND-ODER STABMIXER MIT KUPPLUNGSVORRICHTUNG**
HAND MIXER OR HAND BLENDER COMPRISING A COUPLING DEVICE
BATTEUR A MAIN OU SUR PIED MUNI D'UN DISPOSITIF D'ACCOUPLEMENT

(30) Priorität: 23.03.2001 DE 10114373
(43) Veröffentlichungstag der Anmeldung: 02.01.2004
(73) Patentinhaber: Braun GmbH, 61476 Kronberg (DE)
(72) Erfinder: GILI, Sergi, E-08820 El Prat del Llobregat (ES); REBORDOSA, Antonio, 08272 Sant Fruitos de Bages (ES); PENARANDA, Mariano, E-08005 Barcelona (ES); RAFOLS, Robert, E-08100 Sant Fost de Campcentelles (ES)
(86) Internationale Anmeldenummer: PCT/EP2002/001774
(87) Internationale Veröffentlichungsnummer: WO 2002/076274

(56) Entgegenhaltungen:
- WO-A-99/03388
- GB-A- 1 160 289
- US-A- 1 767 346
- US-A- 5 150 967
- US-A- 5 567 047

## Beschreibung

Die Erfindung betrifft einen Hand- oder Stabmixer mit Kupplungsvorrichtung gemäß dem Oberbegriff des Patentanspruchs 1.

Aus dem Stand der Technik sind eine Vielzahl von Hand- oder Stabmixern mit Kupplungsvorrichtungen bekannt. Durch entsprechende Kupplungsvorrichtungen wird i.d.R. eine mit einem Motorteil verbundene Antriebswelle und eine an einem Anbaugerät angebrachte Werkzeugwelle in Wellenlängsrichtung zueinander fixiert, was die Übertragung eines Drehmomentes von der Antriebswelle auf die Werkzeugwelle und damit auf ein Werkzeug des Anbaugerätes ermöglicht. Die Kupplungsvorrichtung ist dabei mit einer Kupplungshälfte fest mit dem Motorteil und mit der anderen Kupplungshälfte fest mit dem Anbaugerät verbunden. Eine bekannte Art der Verbindung besteht dabei in einer Gewindeverschraubung der beiden zu verbindenden Bauteile.

Eine weitere Kupplungsvorrichtung wird beispielsweise in der FR 1467108 offenbart. Darin wird bei einem handgehaltenem Küchengerät an das länglich ausgebildete Gehäuse eines Motorteils ein Rührer als Anbaugerät aufgesteckt. Die axiale Fixierung der Werkzeugwelle zu der Antriebswelle erfolgt bei diesem Gerät durch den feststehenden Gehäuseteil des Anbaugerätes. Dieser wird durch einen Schnappverschluß mit dem feststehenden Gehäuse des Antriebsteils verbunden. Der Schnappverschluß wird dabei durch am Material angeordnete Halteelemente gebildet, die mittels Federdruck nach innen in Richtung einer kreisförmigen Aufnahmeöffnung wirken. Der zylindrische Kupplungsabschnitt des Anbaugerätes weist dabei eine umlaufende Nut auf, in die die Halteelemente eingreifen. Die Werkzeugwelle selbst wird dabei mit einem verzahnten Verkupplungsende in eine entsprechende Kupplungsverzahnung der Antriebswelle eingeführt. Dabei wird die Kupplungsaufnahme durch eine innenverzahnte Hülse gebildet. Zum lösen des Anbaugerätes wird am Gehäuse des Antriebsteils eine als Druckknopf ausgebildete Auswurfeinrichtung betätigt, die die Halteelemente aus der Nut zurückholt und dadurch das Anbaugerät frei gibt. Auch das verzahnte Wellenende der Werkzeugwelle wird dadurch aus der Kupplungsvorrichtung herausgeschoben.

Eine andere Kupplungsvorrichtung für eine Küchenmaschine wird in der EP-0 692 215 A1 beschrieben. Darin wird ein Handmixer offenbart, bei dem ein die Werkzeugwelle enthaltender Werkzeugschaft lösbar mit dem Motorteil des Handmixers verbunden ist. Hierzu ist am Motorteil senkrecht zur Antriebswelle eine etwa U-förmige Spreizklammer vorgesehen, die in eine Befestigungsnut des Werkzeugschaftes eingreift. Die freien Enden der Spreizklammer liegen dabei an Spreizflächen an. Zum Lösen der Verbindung zwischen dem Motorteil und dem Werkzeugschaft wird die Spreizklammer mittels eines Druckknopfes verschoben. Dabei gleiten die freien Enden an den Spreizflächen entlang, wodurch die Schenkel der Spreizklammer auseinander gedrückt werden und somit aus der Befestigungsnut heraustreten. Damit ist die Verbindung zwischen dem Motorteil und dem Werkzeugschaft gelöst, so daß die Teile voneinander getrennt werden können. Die Anordnung der für das Aufspreizen der Spreizklammer erforderlichen Spreizflächen sowie der für die Betätigung der Spreizklammern notwendigen Druckknöpfe stellt einen nicht unerheblichen Teile- und Montageaufwand dar.

Schließlich wird in dem Deutschen Gebrauchsmuster DE 200 06 028 U 1 eine weitere Kupplungsvorrichtung für eine Küchenmaschine offenbart. Dabei wird die Verbindung zwischen dem Motorgehäuse und einem Schaftteil mittels eines Halteelementes erreicht, welches aus einem elastischen Werkstoff, vorzugsweise Kunststoff, gebildet ist und welches im wesentlichen einen Rahmen bildet, der eine längere und eine kürzere Achse aufweist. Hierdurch läßt sich eine Klemmverbindung zwischen den Gehäuseteilen herstellen, die durch Betätigung hervorstehender Druckknopfelemente gelöst werden kann. Durch diese Verbindung werden die feststehenden Gehäuseteile in Wellenlängsrichtung axial fixiert. Das Wellendrehmoment der Antriebswelle wird über eine Verzahnungskupplung auf die Werkzeugwelle übertragen.

Nachteil der beschriebenen Kupplungsvorrichtungen für Küchenmaschinen ist einerseits deren aufwendige Bedienung, so besteht beispielsweise bei Schraubverbindungen immer die Gefahr des Verkantens der zu verschraubenden Bauteile, andererseits die hohe Zahl von beweglichen Teilen, wie sie beispielsweise bei Kupplungsverbindungen mit separaten Halteelementen, Schraubenfedern und Betätigungsknöpfen der Fall ist.

Der vorliegenden Erfindung liegt die Aufgabe zugrunde, einen verbesserten Hand- oder Stabmixer mit Kupplungsvorrichtung zur Verfügung zu stellen. Dabei soll das Ein- und Entkuppeln eines Anbaugerätes an ein Antriebsteil einfach und ohne größeren Kraftaufwand möglich sein. Die Herstellung einer derartigen Kupplungsvorrichtung soll femer kostengünstig und einfach sein.

Diese Aufgabe wird durch einen Hand- oder Stabmixer mit den Merkmalen des Patentanspruchs 1 gelöst. Vorteilhafte Ausgestaltungen der Erfindung werden in den Unteransprüchen beschrieben.

Durch die erfindungsgemäße Ausführungsform mit den Merkmalen des Patentanspruchs 1 wird ein verbesserter Hand- oder Stabmixer zur Verfügung gestellt. Dabei wird das Ein- und Entkuppeln eines Anbaugerätes an ein Antriebsteil einfach und ohne größeren Kraftaufwand durch einfaches "Einklicken und Herausdrehen" oder "click-in-turn-out" möglich. In axialer Richtung wird das Kupplungsoberteil durch einfaches Einschnappen der Haltenasen in Vertiefungen am Innenumfang des Kupplungsunterteil axial verriegelt. Da für die Kupplung des erfindungsgemäßen Hand- oder Stabmixers nur eine geringe Anzahl an Bauteilen erforderlich ist und auf das Anbringen zusätzlicher Betätigungselemente verzichtet werden kann, ist deren Herstellung einfach und kostengünstig. Ferner ist hierdurch eine im wesentlichen glatte und abwaschbare Gehäuseausbildung möglich.

Selbstverständlich ist es im Sinne der Erfindung auch denkbar, die Haltenasen am Kupplungsunterteil und die Vertiefungen am Kupplungsoberteil anzubringen, d.h. es ergibt sich die äquivalente Lösung.

Eine vorteilhafte Ausgestaltung der Erfindung sieht die Merkmale des Patentanspruchs 2 vor. Dabei ist die Rampe als stetig ansteigende Wulst ausgebildet. Hierdurch wird beispielsweise beim Einsetzen des Kupplungsoberteils in das Kupplungsunterteil ein Entlanggleiten der Haltenasen auf der Rampe möglich, wobei dabei zuvor die Haltenasen radial federnd nach innen gedrückt werden, um ein Einsetzen überhaupt zu ermöglichen.

Eine vorteilhafte Weiterbildung von Patentanspruch 2 sieht die Merkmale von Patentanspruch 3 vor. Durch diese Formgebung wird auf überraschend einfache Weise gewährleistet, daß die Haltenasen sicher verriegeln, egal von welcher Richtung sie auf die Nasenaufnahme zu bewegt werden.

Eine weitere vorteilhafte Weiterbildung von Patentanspruch 2 sieht die Merkmale von Patentanspruch 4 vor. Hierdurch wird beim Verdrehen beider Kupplungsteile ein sicheres axiales Verschieben, also Trennen beider Teile voneinander möglich.

Durch die Merkmale des Patentanspruchs 5 wird ein sicheres Verriegeln aufgrund des Hinterhakens der Haltekante in der Nasenaufnahme ermöglicht.

Noch eine vorteilhafte Weiterbildung von Patentanspruch 2 sieht die Merkmale des Patentanspruchs 6 vor. Beispielsweise wird hierdurch erreicht, daß, wenn die Haltenasen an den Enden der U-Schenkel liegen, ein einfaches Entkoppeln möglich ist.

Schließlich sieht eine weitere Weiterbildung von Patentanspruch 2 die Merkmale von Patentanspruch 7 vor. Hierdurch kann vorgesehen werden, daß die Kupplungsvorrichtung axial verriegelt ist, sobald die Haltenasen unter dem Scheitelpunkt der Rampe positioniert sind.

Eine weitere vorteilhafte Ausführungsform der vorliegenden Erfindung sieht die Merkmale des Patentanspruchs 8 vor. Hierdurch wird das Entlanggleiten der Haltenasen auf der Rampe erleichtert.

Besonders vorteilhaft ist eine Ausgestaltung mit den Merkmalen des Patentanspruchs 9. Hierdurch wird ein Verriegeln der Haltenase in der Haltekante der Nasenaufnahme ermöglicht.

Noch eine vorteilhafte Ausgestaltung der vorliegenden Erfindung sieht die Merkmale des Patentanspruchs 10 vor. Dabei sind die Wellenform und die durch die Nasenaufnahme definierte Rampe so aufeinander abgestimmt, daß ein einfaches "Herausdrehen" zum Entkoppeln der Kupplungsverbindung möglich ist. Femer wird durch eine entsprechende Wellenform die Lage des Kupplungsoberteils zum Kupplungsunterteil im verriegelten Zustand definiert, d.h. es wird eine "Fail-safe" Funktion bereitgestellt.

Eine weitere vorteilhafte Ausführungsform sieht die Merkmale des Patentanspruchs 11 vor. Hierdurch wird ein Zentrieren des Kupplungsoberteils zum Kupplungsunterteil und ein einfaches Verdrehen derselben erleichtert.

Noch eine vorteilhafte Weiterbildung der Ausführungsform nach Patentanspruch 11 sieht die Merkmale von Patentanspruch 12 vor. Hierdurch wird die Herstellung als einfaches und kostengünstiges Spritzgußteil möglich, welches je nach Bedarf spanend nachbarbeitet werden kann und federnde Haltenasen aufweist.

Eine weitere vorteilhafte Ausführungsform der vorliegenden Erfindung sieht die Merkmale des Patentanspruchs 13 vor. Hierdurch wird eine kostengünstige, abwaschbare, hygienische und schlagfeste Ausgestaltung ermöglicht. Selbstverständlich sind aber auch andere geeignete Materialien denkbar.

Weitere Ausgestaltungen und Vorteile der Erfindung werden durch die Beschreibung der Ausführungsbeispiele unter Bezugnahme auf die beigefügten Zeichnungen erläutert. Darin zeigen:
- Fig. 1: eine perspektivische Darstellung einer Ausführungsform einer erfindungsgemäßen Kupplungsvorrichtung für eine Küchenmaschine;
- Fig. 2: Detail II aus Fig. 1 ;
- Fig. 3: Detail III aus Fig. 1;
- Fig.4: einen Teilschnitt entlang der Linie IV-IV aus Fig. 3;
- Fig.5: einen Teilschnitt entlang der Linie V-V in Fig. 2;
- Fig. 6, 7, 8: drei schematische Ansichten der Kupplungsvorrichtung aus Fig. 1 in verschiedenen Stufen beim Kupplungsvorgang;
- Fig. 9, 10: zwei schematische Ansichten der oberen Kupplungshälfte der Ausführungsform aus Fig. 1 jeweils um 90° gedreht;
- Fig. 11: eine schematische Ansicht der Kupplungsvorrichtung aus Fig. 1;
- Fig. 12: eine schematische Schnittdarstellung der Kupplungsvorrichtung in Pfeilrichtung XII-XII aus Fig. 11.

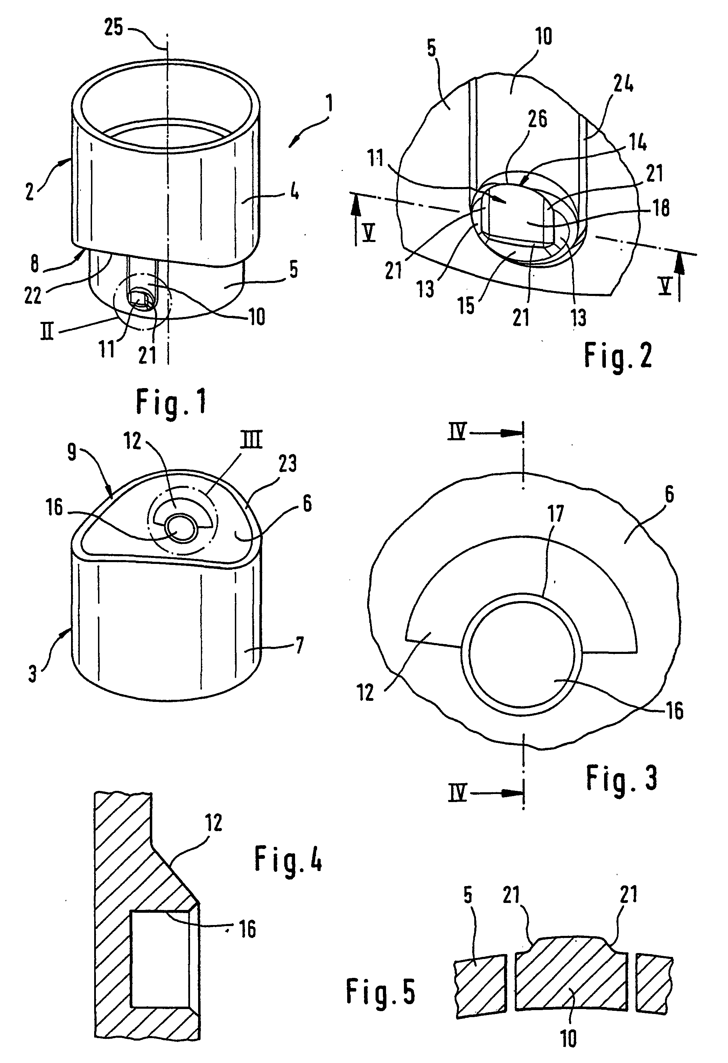

Fig. 1 zeigt eine perspektivische Darstellung einer Kupplungsvorrichtung 1. Dabei ist schematisch das im wesentlichen hohlzylindrische Kupplungsoberteil 2 dargestellt, welches eine obere Fortsetzung im Gehäuse des Antriebsteils eines nicht gezeigten Stabmixers hat. Ferner ist das ebenfalls im wesentlichen hohlzylindrisch ausgebildete Kupplungsunterteil 3 dargestellt, welches seine Fortsetzung im jeweiligen Anbaugerät des Stabmixers findet, was ebenfalls nicht dargestellt ist. Sowohl das Kupplungsoberteil 2 als auch das Kupplungsunterteil 3 sind im vorliegenden Ausführungsbeispiel aus thermoplastischem Kunststoff hergestellt. Konzentrisch zum Kupplungsoberteil 2 verläuft die nicht dargestellte Antriebswelle. Konzentrisch zum nicht dargestellten Kupplungsunterteil verläuft die ebenfalls nicht dargestellte Werkzeugwelle.

Das Kupplungsoberteil 2 weist einen glatten Mantel 4 auf, der einen mit einer wellenförmigen Gleitfläche 22 ausgebildeten unteren Absatz 8 aufweist. Die Gleitfläche 22 verläuft im wesentlichen quer zur Längsachse 25 des Kupplungsoberteils 2. An den Absatz 8 schließt eine glatte zylindrische Führungshülse 5 an, die einen geringeren Durchmesser als der Mantel 4 aufweist. Der Absatz 8 weist dabei einen wellenförmig geschwungenen Verlauf auf. Die ebenfalls zylindrisch ausgebildete Führungshülse 5 weist jeweils um 180° versetzt Federelemente 10 auf, die jeweils eine Haltenase 11 tragen. Die Haltenase 11 ist im vorliegenden Ausführungsbeispiel ebenfalls aus thermoplastischem Kunststoff hergestellt und steht in radialer Richtung über den Umfang der Führungshülse 5 hervor.

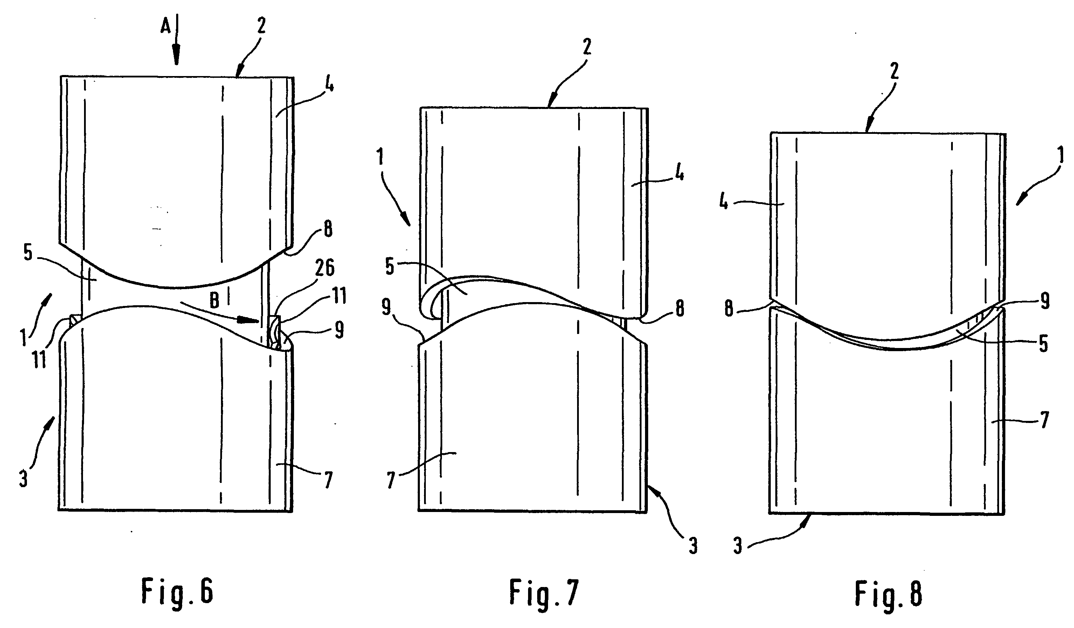

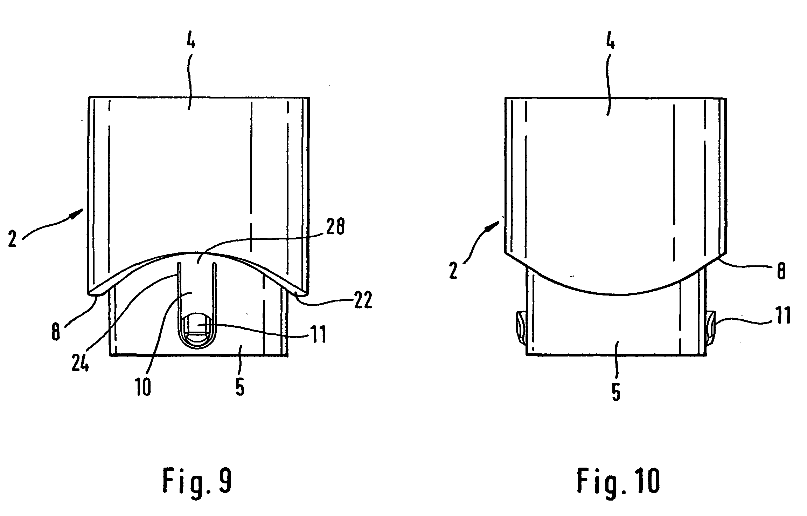

Das Detail II, welches das Federelement 10 und die Haltenase 11 darstellt, ist in Fig. 2 vergrößert dargestellt. Die Kanten 21 zwischen der Stirnseite 18 der Haltenase 11 und den Nasenflanken 13 sowie der Unterseite 15 der Haltenase 11 sind abgerundet oder gefast ausgebildet. Die Kante 26 zwischen der Oberseite der Haltenase 11 und der Stirnseite 18 ist als Haltehaken 14 ausgebildet, d. h. sie steht wie ein Widerhaken über die Oberseite der Haltenase 11 hervor. Ferner ist in Fig. 5 ein Schnitt entlang der Linie V-V dargestellt, aus dem der prinzipielle Aufbau der Führungshülse 5 mit dem Federelement 10 nochmals hervorgeht, wobei das Federelement durch seitliche Einschnitte 24 von der Führungshülse 5 getrennt ist und nur im oberen Bereich 28 (Fig. 9) an diese federnd angebunden ist.

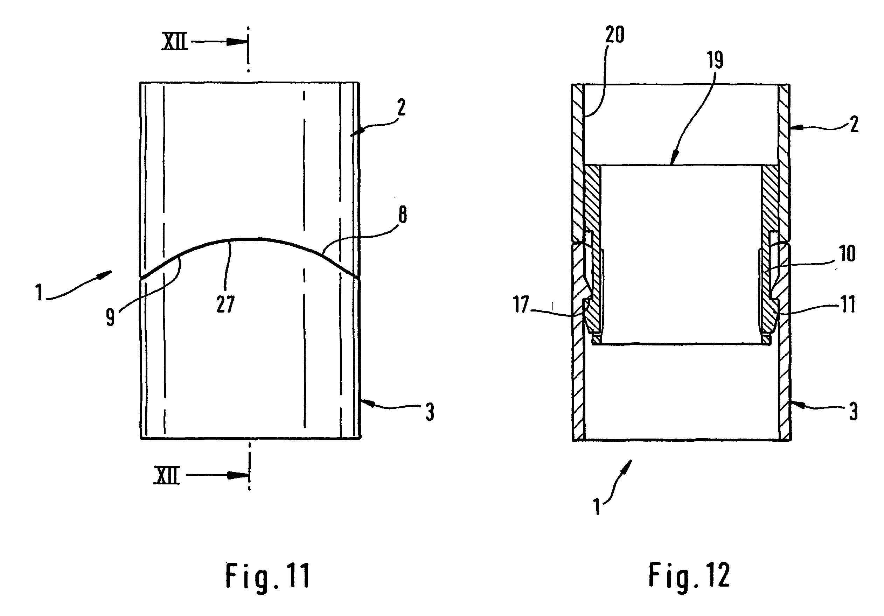

Ferner ist in Fig. 1 das Kupplungsunterteil 3 in einer schematischen perspektivischen Darstellung gezeigt. Das Kupplungsunterteil 3 ist dabei im wesentlichen als Hohlzylinder ausgebildet, der an seinem oberen Ende eine als Gleitauflage 9 ausgebildete Gleitfläche 23 aufweist. Die Gleitauflage 9 ist dabei wellenförmig ausgebildet und korrespondiert mit dem Absatz 8 des Kupplungsoberteils 2, d.h., in eingesetztem Zustand liegen beide Gleitflächen 22, 23 aneinander an und bilden einen kleinen Schlitz 27 (Fig. 11). Die Gleitflächen 22, 23 verlaufen umlaufend um die Teile 2, 3.

Weiter sind an der glatten Innenwand 6 des Kupplungsunterteils 3 um 180° versetzt sichelförmige Rampen 12 angeordnet. Die Rampe 12 ist als Detail III aus Fig. 1 in Fig. 3 vergrößert dargestellt. Unterhalb der Rampe ist eine als kreisförmige Vertiefung oder Nut ausgebildete Nasenaufnahme 16 angeordnet. Der Innendurchmesser des Kupplungsunterteils 3 ist dabei gerade groß genug, um die Führungshülse 5 des Kupplungsoberteils 2 aufzunehmen.

Ferner ist die Außenwand 7 des Kupplungsunterteils 3 so ausgeführt, daß sie im gekuppelten Zustand glatt mit dem Mantel 4 des Kupplungsoberteils 2 abschließt.

Fig. 3 zeigt, wie bereits erwähnt, Detail III aus Fig. 1. Die sichelförmige Rampe 12 ist dabei wie ein liegendes U angeordnet, d. h. die beiden Schenkelseiten zeigen nach unten und die Wölbung weist nach oben in Richtung des Kupplungsoberteils 2. Die Breite der Rampe 12 bleibt dabei im wesentlichen konstant. Die als Haltekante 17 ausgebildete Unterkante der Rampe 12, d. h. die Innenseite des U's, ist dabei als glatter Vorsprung bzw. als Hinterschneidung ausgebildet, in die der Haltehaken 14 der Haltenase 11 eingreifen kann. Wie der Darstellung in Fig. 3 zu entnehmen ist, enden die beiden Schenkel des U's in etwa in einer Ebene, die senkrecht auf der Zylinderachse des Kupplungsunterteils steht. Der prinzipielle Aufbau wird dabei nochmals in dem in Fig. 4 dargestellten Schnitt entlang der Linie IV-IV deutlich. Insbesondere ist hier die Rampe 12 und die Nasenaufnahme 16 dargestellt.

Figuren 6, 7 und 8 zeigen drei Abschnitte des Kupplungsvorgangs, der im Folgenden erläutert werden soll.

Fig. 6 zeigt die Kupplungsvorrichtung 1 mit dem Kupplungsoberteil 2 und dem Kupplungsunterteil 3, wobei das Kupplungsoberteil 2 in Pfeilrichtung A auf das Kupplungsunterteil 2 aufgesetzt ist. Dabei zeigen die "Wellenberge" des Absatzes 8 des Kupplungsoberteils 2 und der Gleitauflage 9 des Kupplungsunterteils 3 aufeinander. Die Führungshülse 5, die einen kleineren Durchmesser als die Außenwand 4 des Kupplungsoberteils 2 aufweist, wird dabei teilweise von dem Kupplungsunterteil 3 aufgenommen. Ferner stehen rechts und links von der Führungshülse 5 die jeweils um 180° versetzt angeordneten Haltenasen 11 von den nicht erkennbaren Federelementen 10 des Kupplungsoberteils 2 hervor.

Unter leichtem Druck in Pfeilrichtung A wird nun das Kupplungsoberteil 2 in Pfeilrichtung B gedreht, während das Kupplungsunterteil 3 festgehalten wird. Dabei gleitet der Absatz 8 des Kupplungsoberteils 2 entlang der Gleitauflage 9 des Kupplungsunterteils 3, d.h. der "Wellenberg" des Absatzes 8 gleitet ins "Wellental" der Gleitauflage 9.

Fig. 7 zeigt eine weitere Stufe des Kupplungsvorganges, bei dem das Kupplungsoberteil 2 und das Kupplungsunterteil 3 bereits teilweise gegeneinander verdreht sind, d. h. der "Wellenberg" des Absatzes 8 des Kupplungsoberteils 2 nähert sich bereits dem "Wellental" der Gleitauflage 9 des Kupplungsunterteils 3. Hierdurch bewegt sich das Kupplungsoberteil 2, wie bereits in Fig. 6 gezeigt, in Pfeilrichtung A nach unten. Die Führungshülse 5 wandert immer tiefer in das Kupplungsunterteil 3.

Fig. 8 zeigt die Kupplungsvorrichtung 1 kurz vor dem vollständig eingekuppelten Zustand. Im eingekuppelten Zustand liegen der Absatz 8 des Kupplungsoberteils 2 und die Gleitauflage 9 des Kupplungsunterteils 3 vollständig aufeinander auf, d. h. die Wellenformen des Absatzes 8 und der Gleitauflage 9 korrespondieren miteinander. Die beiden Kupplungshälften werden hierdurch und durch die Führungshülse 5 zueinander zentriert. Die Außenwand 4 des Kupplungsoberteils 2 und die Außenwand 7 des Kupplungsunterteils 3 schließen dabei flächig miteinander ab. Die Führungshülse 5 verschwindet vollständig in dem Kupplungsunterteil 2.

Die Haltenasen 11 sind dabei federnd ausgebildet, d. h. sie verschwinden während des Kupplungsvorganges zunächst vollständig in der Kontour der Führungshülse 5, wenn das Kupplungsoberteil 2 in das Kupplungsunterteil 3 eingreift, wie in Fig. 6 gezeigt. Während des Verdrehens des Kupplungsoberteils 2 gegen das Kupplungsunterteil 3 gleiten die eingedrückten Haltenasen 11 an der Innenwand 6 des Kupplungsunterteils entlang, bis sie einen Schenkel der sichelförmigen Rampe 12 erreichen. An der Rampe 12 gleiten die Haltenasen 11 auf, bis die mit Federdruck beaufschlagte Haltenasen 11 dann schließlich in die Nasenaufnahmen 16 einschnappen. Die Haltenase 11 greift dabei mit dem Haltehaken 14 in die Hinterschneidung der Haltekante 17 der Nasenaufnahme 16 ein. Diese Position ist erreicht, wenn der Absatz 8 des Kupplungsoberteils 2 vollständig auf der Gleitauflage 9 des Kupplungsunterteils 3 aufliegt.

Nun ist die Kupplungsvorrichtung 1, d. h. das Kupplungsoberteil 2 mit dem Kupplungsunterteil 3, vollständig eingekuppelt. Das Anbaugerät ist dadurch mit dem Antriebsteil axial verriegelt.

Der Kupplungsvorgang kann auch dadurch bewerkstelligt werden, daß das Kupplungsoberteil 2 und das Kupplungsunterteil 3 bereits so zueinander positioniert werden, daß die "Wellenberge" des Absatzes 8 und die "Wellentäler" der Gleitauflage 9 bereits miteinander korrespondieren. Dann müssen das Kupplungsoberteil 2 und das Kupplungsunterteil 3 nur in axialer Richtung gegeneinander bewegt werden. Nach Eintritt der Führungshülse 5 in das Kupplungsunterteil 3 werden die Haltenasen 11 von der Innenwand 6 des Kupplungsunterteils 3 nach innen eingedrückt. Beim Aufsetzen des Absatzes 8 auf die Gleitfläche 9 schnappen die Haltenasen 11 in die Nasenaufnahmen 16 ein, wo die Haltehaken 14 der Haltenasen 11 in die Haltekanten 17 einrasten. Die Kupplungsvorrichtung 1 ist axial verriegelt.

Zum Öffnen wird der zu Figuren 6 bis 8 beschriebene Kupplungsvorgang in umgekehrter Richtung durchgeführt. Das Kupplungsoberteil 2 wird dabei gegen das Kupplungsunterteil 3 verdreht. Die Haltenase 11 gleitet an ihrer Unterseite 15 bzw. an einer ihrer Nasenflanken 13 auf die Rampe 12 auf, bis sie an eine Position angelangt, wo die Haltehaken 14 der Haltenasen 11 nicht mehr im Eingriff mit den Haltekanten 17 der Nasenaufnahmen 16 stehen. Die Haltenase 11 gleitet dadurch über die abgerundeten oder angefasten Ecken zwischen der Stirnseite 18 der Haltenase 11 und den Nasenflanken 13 aus der nutförmigen Vertiefung der Nasenaufnahme 16 heraus und wird gegen den Federdruck der Federelemente 10 an der Führungshülse 5 des Kupplungsoberteils 2 eingedrückt. Über den wellenförmig ausgebildeten Absatz 8 wird das Kupplungsoberteil 2 dann einfach herausgedreht. Hierdurch wird ein so genanntes "click-in-turn-out" System geschaffen.

Figuren 9 bis 10 zeigen jeweils zwei schematische Ansichten des Kupplungsoberteils 2, jeweils um 90° gedreht. Darin sind der Mantel 4 und die Führungshülse 5 gezeigt. Femer ist in Fig. 9 das parallel zur Kupplungslängsachse auf der Führungshülse 5 verlaufende Federelement 10 und die daraus senkrecht hervorgehende Haltenase 11 erkennbar. Auch ist deutlich der geringere Durchmesser der Führungshülse 5 gegenüber der Außenwand 4 des Kupplungsoberteils 2 zu erkennen. Der Absatz 8 zwischen dem Mantel 4 und der Führungshülse 5 wird durch die wellenförmig ausgebildete Gleitauflage 8 gebildet.

Fig. 11 zeigt eine schematische Ansicht der Kupplungsvorrichtung 1 in gekuppeltem Zustand. Dabei liegt der Absatz 8 des Kupplungsoberteils 2 vollständig auf der Gleitauflage 9 des Kupplungsunterteils 3 auf.

Fig. 12 zeigt eine schematische Schnittdarstellung der Kupplungsvorrichtung 1 aus Fig. 11 entlang der Schnittlinie XII-XII. Im Kupplungsoberteil 2 ist dabei eine im wesentlichen zylinderförmig ausgebildete Hülse 19 ausgebildet. Die Hülse 19 liegt an der Innenwand 20 des Kupplungsoberteils 2 an. Die Hülse 19 weist einstückig damit verbundene Federelemente 10 auf. Am unteren Ende der Federelemente 10 ist ein Abschnitt ausgebildet, an dem um 180° versetzt die Haltenasen 11 hervorstehen. Die Hülse 19 ist dabei im vorliegenden Ausführungsbeispiel aus einem federelastischem Kunststoffmaterial hergestellt.

Ferner ist in der Schnittdarstellung in Fig. 12 schematisch das Kupplungsunterteil 3 dargestellt, welches im Bereich der Nasenaufnahme 12 die Haltekante 17 aufweist, in die die Haltehaken 14 der Haltenase 11 im verriegelten Zustand eingreifen.

## Patentansprüche

1. Hand- oder Stabmixer, der zum Trennen des mit einem Arbeitswerkzeug versehenen Schafts vom elektrisch angetriebenen Antriebsteil eine Kupplungsvorrichtung (1) aufweist, wobei ein am Antriebsteil angeordnetes Kupplungsoberteil (2) Verriegelungselemente (11) und ein am Werkzeugschaft angeordnetes Kupplungsunterteil (3) Sperrelemente (16) aufweist, durch die die Kupplungsvorrichtung (1) axial verriegelbar ist,
**dadurch gekennzeichnet,**
**daß** die Verriegelungselemente (11) durch radial nach außen hervorstehende federbeaufschlagte Haltenasen gebildet sind, und daß die Sperrelemente (16) durch Vertiefungen am Innenumfang des Kupplungsunterteils (3) gebildet sind, wobei das Kupplungsoberteil (2) gegen das Kupplungsunterteil (3) verdrehbar und die Kupplungsverbindung dadurch lösbar ist.

2. Hand- oder Stabmixer nach Anspruch 1,
**dadurch gekennzeichnet,**
**daß** um die Vertiefungen (16) erste Rampen (12) ausgebildet sind, an denen die Haltenasen (11) beim Einsetzen des Kupplungsoberteils (2) in das Kupplungsunterteil (3) entlanggleiten und dabei federnd nach innen gedrückt werden.

3. Hand- oder Stabmixer nach Anspruch 2,
**dadurch gekennzeichnet,**
**daß** die Rampe (12) mondsichel- oder U-förmig ausgebildet ist.

4. Hand- oder Stabmixer nach Anspruch 1,
**dadurch gekennzeichnet,**
**daß** das Kupplungsoberteil (2) und das Kupplungsunterteil (3) eine bei Verdrehen beider Teile (2, 3) diese voneinander axial verschiebende Trennvorrichtung (8, 9) aufweisen.

5. Hand- oder Stabmixer nach Anspruch 2,
**dadurch gekennzeichnet,**
**daß** die Rampe (12) an ihrer Innenseite eine hinterschnittene Haltekante (17) aufweist.

6. Hand- oder Stabmixer nach Anspruch 2,
**dadurch gekennzeichnet,**
**daß** die Enden der mondsichel- oder U-förmigen Rampe (12) in einer Ebene liegen, die senkrecht auf der Längsachse des Kupplungsunterteils steht.

7. Hand- oder Stabmixer nach Anspruch 2,
**dadurch gekennzeichnet,**
**daß** der Scheitel der mondsichel- oder U-förmigen Rampe (12) in Richtung des Kupplungsoberteils (2) weist.

8. Hand- oder Stabmixer nach einem der vorangehenden Ansprüche,
**dadurch gekennzeichnet,**
**daß** jeweils die Stirnseiten (18) der Haltenasen (11) abgerundete oder angefaste Kanten (21) aufweisen.

9. Hand- oder Stabmixer nach einem der vorangehenden Ansprüche,
**dadurch gekennzeichnet,**
**daß** die Haltenasen (11) jeweils einen zwischen deren Stirnseite (18) und deren Oberseite ausgebildeten Haltehaken (14) aufweisen.

10. Hand- oder Stabmixer nach Anspruch 4,
**dadurch gekennzeichnet,**
**daß** ein am Kupplungsoberteil (2) ausgebildeter Absatz (8) und eine am Kupplungsunterteil (3) ausgebildete Gleitauflage (9) korrespondierende wellenförmige Flächen (22, 23) aufweisen, die im montierten Zustand aneinander anliegen und sich gegenüberstehen und die die Trennvorrichtung (8, 9) bilden.

11. Hand- oder Stabmixer nach einem der vorangehenden Ansprüche,
**dadurch gekennzeichnet,**
**daß** das Kupplungsoberteil (2) eine zylindrische Führungshülse (5) aufweist, die im Kupplungsunterteil (3) aufnehmbar ist.

12. Hand- oder Stabmixer nach Anspruch 10,
**dadurch gekennzeichnet,**
**daß** die Führungshülse (5) aus Kunststoff hergestellt ist, an der Einschnitte zur Bildung von Federelementen (10) ausgebildet sind, an deren freien Enden sich die Haltenasen (11) hervorheben.

13. Hand- oder Stabmixer nach einem der vorangehenden Ansprüche,
**dadurch gekennzeichnet,**
**daß** das Kupplungsoberteil (2) und das Kupplungsunterteil (3) aus thermoplastischem Kunststoff hergestellt sind.

## Claims

1. A handheld or immersion blender including a coupling device (1) for separating the shank provided with a processing tool from the electrically powered drive part, with an upper coupling part (2) arranged on the drive part having locking elements (11) and a lower coupling part (3) arranged on the tool shank having detent elements (16), which enable the coupling device (1) to be interlocked axially,
**characterized in that** the locking elements (11) are formed by spring-loaded holding lugs projecting radially outwardly, and the detent elements (16) are formed by recesses on the inner circumference of the lower coupling part (3), with the upper coupling part (2) being twistable relative to the lower coupling part (3), whereby a releasable coupling is obtained.

2. The handheld or immersion blender as claimed in claim 1,
**characterized in that** first ramps (12) are formed around the recesses (16), along which ramps the holding lugs (11) slide when the upper coupling part (2) is inserted in the lower coupling part (3), the lugs being pressed resiliently inwardly in the process.

3. The handheld or immersion blender as claimed in claim 2,
**characterized in that** the ramp (12) is of a crescent- or U-shaped configuration.

4. The handheld or immersion blender as claimed in claim 1,
**characterized in that** the upper coupling part (2) and the lower coupling part (3) include a separating device (8, 9) moving the two parts (2, 3) axially away from each other when said two parts are twisted.

5. The handheld or immersion blender as claimed in claim 2,
**characterized in that** the ramp (12) has on its inside an undercut holding edge (17).

6. The handheld or immersion blender as claimed in claim 2,
**characterized in that** the ends of the crescent- or U-shaped ramp (12) lie in a plane perpendicular to the longitudinal axis of the lower coupling part.

7. The handheld or immersion blender as claimed in claim 2,
**characterized in that** the vertex of the crescent- or U-shaped ramp (12) points in the direction of the upper coupling part (2).

8. The handheld or immersion blender as claimed in any one of the preceding claims,
**characterized in that** the respective front sides (18) of the holding lugs (11) have radiused or beveled edges (21).

9. The handheld or immersion blender as claimed in any one of the preceding claims,
**characterized in that** the holding lugs (11) have a respective holding hook (14) provided between the lug's front side (18) and top side.

10. The handheld or immersion blender as claimed in claim 4,
**characterized in that** a shoulder (8) formed on the upper coupling part (2) and a sliding support (9) formed on the lower coupling part (3) including wave-shaped mating surfaces (22, 23) which in the assembled state are in relative engagement and opposite each other, forming the separating device (8, 9).

11. The handheld or immersion blender as claimed in any one of the preceding claims,
**characterized in that** the upper coupling part (2) has a cylindrical guide sleeve (5) adapted to be received in the lower coupling part (3).

12. The handheld or immersion blender as claimed in claim 10,
**characterized in that** the guide sleeve (5) is made of a plastic material having slits for the formation of spring elements (10) at the free ends of which the holding lugs (11) project.

13. The handheld or immersion blender as claimed in any one of the preceding claims,
**characterized in that** the upper coupling part (2) and the lower coupling part (3) are fabricated from a thermoplastic material.

## Revendications

1. Batteur à main ou sur pied, qui comporte un dispositif d'accouplement (1) pour séparer un corps muni d'un outil de travail, de la partie d'entraînement entraînée électriquement, une partie supérieure d'accouplement (2) placée sur la partie d'entraînement comprenant des éléments de verrouillage (11) et une partie inférieure d'accouplement (3) placée sur le corps d'outil comprenant des éléments de blocage (16), par lesquels le dispositif d'accouplement (1) peut être verrouillé axialement,
**caractérisé en ce que** les éléments de verrouillage (11) sont formés par des tenons de retenue sollicités de manière élastique et faisant saillie radialement vers l'extérieur, et **en ce que** les éléments de blocage (16) sont formés par des creux sur la périphérie intérieure de la partie inférieure d'accouplement (3), la partie supérieure d'accouplement (2) pouvant tourner par rapport à la partie inférieure d'accouplement (3) en permettant ainsi le démontage de la liaison d'accouplement.

2. Batteur à main ou sur pied selon la revendication 1, **caractérisé en ce qu'**autour des creux (16) sont formées de premières rampes (12) le long desquelles, lors de l'insertion de la partie supérieure d'accouplement (2) dans la partie inférieure d'accouplement (3), glissent les tenons de retenue (11) en étant repoussés élastiquement vers l'intérieur à cette occasion.

3. Batteur à main ou sur pied selon la revendication 2, **caractérisé en ce que** la rampe (12) est réalisée en forme de croissant de lune ou en forme de U.

4. Batteur à main ou sur pied selon la revendication 1, **caractérisé en ce que** la partie supérieure d'accouplement (2) et la partie inférieure d'accouplement (3) présentent un dispositif de séparation (8, 9) qui, lors d'une rotation relative des parties (2, 3) l'une par rapport à l'autre, produit l'écartement axial de celles-ci, par coulissement.

5. Batteur à main ou sur pied selon la revendication 2, **caractérisé en ce que** la rampe (12) comporte sur son côté intérieur, un bord de retenue (17) en contre-dépouille.

6. Batteur à main ou sur pied selon la revendication 2, **caractérisé en ce que** les extrémités de la rampe (12) en forme de croissant de lune ou en forme de U se situent dans un plan qui est perpendiculaire à l'axe longitudinal de la partie inférieure d'accouplement.

7. Batteur à main ou sur pied selon la revendication 2, **caractérisé en ce que** le sommet de la rampe (12) en forme de croissant de lune ou en forme de U est dirigé vers la partie supérieure d'accouplement (2).

8. Batteur à main ou sur pied selon l'une des revendications précédentes, **caractérisé en ce que** les faces frontales respectives (18) des tenons de retenue (11) présentent des bords (21) arrondis ou chanfreinés.

9. Batteur à main ou sur pied selon l'une des revendications précédentes, **caractérisé en ce que** les tenons de retenue (11) présentent chacun un crochet de retenue (14), entre leur face frontale (18) et leur côté supérieur.

10. Batteur à main ou sur pied selon la revendication 4, **caractérisé en ce qu'**un décrochement (8) formé sur la partie supérieure d'accouplement (2) et un appui de glissement (9) formé sur la partie inférieure d'accouplement (3), présentent des surfaces ondulées correspondantes (22, 23), qui, dans l'état monté, s'appliquent l'une sur l'autre et sont en regard l'une de l'autre, et qui forment le dispositif de séparation (8, 9).

11. Batteur à main ou sur pied selon l'une des revendications précédentes, **caractérisé en ce que** la partie supérieure d'accouplement (2) présente un manchon de guidage (5) cylindrique qui peut venir se loger dans la partie inférieure d'accouplement (3).

12. Batteur à main ou sur pied selon la revendication 10, **caractérisé en ce que** le manchon de guidage (5) est fabriqué en matière plastique, dans laquelle sont réalisées des entailles pour former des éléments élastiques (10) aux extrémités libres desquels font saillie les tenons de retenue (11).

13. Batteur à main ou sur pied selon l'une des revendications précédentes, **caractérisé en ce que** la partie supérieure d'accouplement (2) et la partie inférieure d'accouplement (3) sont fabriquées en une matière plastique thermoplastique.
